# EUROPEAN PATENT SPECIFICATION

(11) **EP 3 589 671 B1**
(45) Date of publication and mention of the grant of the patent: **13.12.2023**
(21) Application number: 18710639.8
(22) Date of filing: 27.02.2018
(51) Int. Cl.: C08G 18/24, C08G 18/10, C08G 18/48, C08G 18/50, C08G 18/08, C08G 18/76

(54) **MULTI-COMPONENT ADHESIVE SYSTEM**
MEHRKOMPONENTENKLEBESYSTEM
SYSTÈME ADHÉSIF À COMPOSANTS MULTIPLES

(30) Priority: 01.03.2017 GB 201703336
(43) Date of publication of application: 08.01.2020
(73) Proprietor: Arkema France, 92700 Colombes (FR)
(72) Inventor: POWER, Hannah Teresa, Redditch Worcestershire B98 0BF (GB); PARENT, Nathalie, Kidderninster Worcestershire DY11 5UA (GB); LOARTE, Lucia Blanco, Stourport-on-Severn Worcestershire DY13 8DY (GB)
(74) Representative: Bandpay & Greuter
(86) International application number: PCT/US2018/019864
(87) International publication number: WO 2018/160535

(56) References cited:
- EP-A1- 2 360 197
- DE-A1- 19 945 831
- US-A1- 2011 059 318

## Description

### FIED OF THE INVENTION

The present invention relates to a multi-component urethane adhesive system comprising a prepolymer component and a curative component. The adhesive system is suitable as a primer-less, high temperature-resistant adhesive composition.

### BACKGROUND OF THE RELATED ART

Urethane adhesives are commonly used for bonding fibre-reinforced polymer resin composite parts, particularly in the automotive industry. Fibre-reinforced plastics such as sheet molding compound (SMC), resin transfer molding (RTM), bulk molding compound (BMC) and reinforced dicyclopentadiene (DCPD) polymers are commonly used to form body panels and other exterior components of automobiles, trucks and other vehicles. These parts are often assembled to each other or to the rest of the vehicle through the use of an adhesive. The fibre-reinforced composites (also referred to as pre-pregs or fibre-reinforced plastics (FRP)) can comprise glass fibre and/or carbon fibre. Commercially useful adhesives achieve high bonding strength to a fibre-reinforced composite surface without the need for surface treatment of the substrate, for instance without the need for a primer (referred to herein as primer-less fibre-reinforced composites). For instance, US-4876308 teaches a two-component polyurethane adhesive comprising a nitrogen-free liquid polyether or polyester curative component and a urethane prepolymer component containing free NCO groups, wherein the ratio of the free NCO groups in the prepolymer component to the OH groups and NH groups in the curative component is at least 1.2. The two-component polyurethane adhesive systems disclosed in US-5175228 and US-5340901 bond to treatment-free surfaces while also exhibiting high temperature resistance, i.e. while resisting degradation and/or adhesive bond failure at elevated temperatures.

It is an object of the present invention to improve the adhesive strength of two-part urethane adhesive systems and composite parts in which they are used as adhesives, particularly over a wide temperature range, and particularly at high temperatures. It is a further object of the present invention to provide a two-part urethane adhesive system which exhibits excellent adhesive bond strength to a range of substrates, including fibre-reinforced composites, coated metals such as epoxy-coated metallic sheet, where for instance the metal is aluminum or steel, and polymeric materials (including polyolefin, polyester, polyamide, polycarbonate and acrylonitrile butadiene styrene), particularly over a wide temperature range, and particularly at high temperatures. Thus, it is an object of the present invention to improve not only the adhesive bond strength but also the heat resistance of the adhesive bond.
US 2011/0059318 discloses urethane adhesive compositions comprising amide based polyols. The amide polyols comprise the reaction product of a reactant selected from the group consisting of lactic acid, lactic acid esters, lactone, glycolic acid, glycolic acid esters, and combinations thereof with one or more amines. The urethane adhesive compositions may be applied in methods of manufacturing a tile installation.
DE 19945831 discloses an isocyanate group containing prepolymer obtainable by multi-stage reaction of at least one isocyanate with at least two compounds having at least two H atoms which can react with isocyanate groups. The compounds have (a) at least one polyester alcohol and (b) at least one polyetheralcohol with a halogen atom in the molecule, in the presence of phosphorus containing compounds having no groups which react with isocyanates.
EP 2360197 discloses a polyisocyanate prepolymer composition (I), obtained by mixing polyisocyanates with compounds having isocyanate-reactive groups, propellant, flame retardants, catalysts, chelating agents, and optionally other additives, where the polyisocyanates are used in a quantity, related to the used components, such that more isocyanate groups are contained than isocyanate-reactive groups.

### BRIEF DESCRIPTION OF THE DRAWING

FIG. 1 shows a diagram of two substrates bonded with adhesive having a tensile force F in the same direction of the bonded joint and substrates axis.
FIG. 2 shows a diagram of the edge of the bonded substrates.
FIG. 3 shows a diagram of failure modes of the bonded substrates.

### DETAILED DESCRIPTION OF THE INVENTION

The invention is defined in the appended claims. According to the present invention, there is provided a multi-component urethane adhesive system comprising:
(A) a prepolymer component made from:
   (i) one or more polyol intermediate(s), and
   (ii) one or more isocyanate(s); and
(B) a curative component comprising:
   (i) one or more polyol(s), and
   (ii) one or more catalyst(s),
wherein the adhesive system further comprises 0.1 to 10.0 wt% based upon the total weight of the multi-component urethane adhesive system of an organo-clay and 0.1 to 10.0 wt% based upon the total weight of the multi-component urethane adhesive system of a halogenated polyether polyol.

The organo-clay can be present in the prepolymer component and optionally also the curative component. In one non-limiting embodiment, the organo-clay is present in the curative component.

It has been found, unexpectedly, that such adhesive systems exhibit superior adhesive bond strength to a range of substrates, including fibre-reinforced composites (particularly primer-less fibre-reinforced composites), and over a range of temperatures.

The multi-component urethane adhesive system is preferably a two-component system. Thus, the adhesive system is suitably a two-component system comprising the prepolymer component and the curative component.

The urethane system of the present invention is an uncured multi-part composition which contains a urethane prepolymer component and a curative component.

### The prepolymer component

Preferably, the polyol intermediate is selected from the group consisting of polyether polyols, polyester polyols, and combinations thereof. The polyol intermediate may comprise one or more different types of polyether polyol and/or one or more different types of polyester polyol. The polyol intermediate is preferably a primary hydroxyl-terminated polyol intermediate. Thus, preferably the polyol intermediate is a polyether polyol, or a polyester polyol, having primary hydroxy groups.

The polyol intermediate is preferably a liquid. The polyol intermediate preferably exhibits a number average molecular weight (Mn) of from about 400 to about 10,000 Daltons and desirably from about 2,000 to about 9,000 Daltons. Molecular weight determination may be conducted on a Hewlett-Packard 1050 Series HPLC system equipped with two GPC Ultrastyragel columns, 10³ and 10⁴ Å (5 µm mixed, 300 mm x 19 mm, Waters Millipore Corporation, Milford, MA, USA) and THF as mobile phase. The molecular weight is calculated by comparison with the retention times of polystyrene standards. The molecular weights referred to herein are measured by this method unless otherwise indicated.

A wide range of polyether or polyester polyols can be used in as the polyol intermediate, including diols, triols, tetrols, and the like.

Polyether polyols are generally made by reacting an alkylene oxide having from 2 to 10 carbon atoms such as propylene oxide with a strong base such as potassium hydroxide, preferably in the presence of water, glycols and so forth. Polyether polyols can also be made by ring opening polymerization of tetrahydrofuran or epichlorhydrin using acid catalysts. Except for polyols made from ethylene oxide or polytetrahydrofuran, to obtain primary hydroxyl end groups, they are generally end capped with ethylene oxide. Examples of polyethers which can be utilized are those which are produced by polymerization of tetrahydrofuran or epoxides (such as ethylene oxide, propylene oxide, butylene oxide, styrene oxide, or epichlorohydrin), or by addition of epoxide compounds (preferably ethylene oxide or propylene oxide), alone, in a mixture, or in succession, to starting components with reactive hydrogen atoms such as water, polyhydric alcohols, ammonia or polyfunctional amines. Grafted polyether polyols such as those grafted with styrene or acrylonitrile can also be utilized. A preferred polyether intermediate is a polypropylene ether diol or triol containing primary hydroxyl end groups.

Polyethers having a highly branched chain are readily prepared from alkylene oxides and initiators having an active hydrogen functionality greater than two. The higher functional initiators that are useful with the alkylene oxides include polyols, polyamines and amino alcohols having a total of three or more reactive hydrogen atoms on hydroxyl and primary or secondary amino groups and generally having up to 12 carbon atoms. Suitable polyols include triols, such as glycerol, trimethylolpropane, butanetriols, hexanetriols, trialkanolamines, various diethylenetriamines, such as erythritol and pentaerythritol; pentols, hexols, such as dipentaerythritol and sorbitol; as well as alkyl glucosides, carbohydrates, polyhydroxy fatty acid esters such as castor oil; and polyoxy alkylated derivatives or polyfunctional compounds having three or more reactive hydrogen atoms, such as, the reaction product of trimethylolpropane, glycerol and other polyols with ethylene oxide, propylene oxide or other epoxides or copolymers thereof, e.g., copolymers of ethylene and propylene oxides, with ethylene oxide being used in a molar amount of not over 20 mol percent as compared to other alkylene oxides like propylene oxide. Examples of higher functional amino alcohols and polyamine initiators include ethanolamine, diethanolamine, triethanolamine, isopropanolamine, diisopropanolamine, triisopropanolamine, 2-(2-aminoethylamino)ethanol, 2-amino-2(hydroxymethyl)-1,3-propanediol, ethylenediamine, diethylenetriamine, triethylenetetramine, and urea as well as various aryl polyamines such as 4,4',4"-methylidynetrianiline.

Polyester polyols are formed from the condensation of one or more polyhydric alcohols having from 2 to 15 carbon atoms with one or more polycarboxylic acids having from 2 to 14 carbon atoms. Examples of suitable polyhydric alcohols include the following: ethylene glycol, propylene glycol such as 1,2-propylene glycol and 1,3-propylene glycol, glycerol; pentaerythritol; trimethylolpropane; 1,4,6-octanetriol; butanediol; pentanediol; hexanediol; dodecanediol; octanediol; chloropentanediol, glycerol monoallyl ether; glycerol monoethyl ether, diethylene glycol; 2-ethylhexanediol-1,4; cyclohexanediol-1,4; 1,2,6-hexanetriol; 1,3,5-hexanetriol; 1,3-bis-(2-hydroxyethoxy)propane and the like.

Examples of polycarboxylic acids include the following: phthalic acid; isophthalic acid; terephthalic acid; tetrachlorophthalic acid; maleic acid; dodecylmaleic acid; octadecenylmaleic acid; fumaric acid; aconitic acid; trimellitic acid; tricarballylic acid; 3,3'-thiodipropionic acid; succinic acid; adipic acid; malonic acid, glutaric acid, pimelic acid, sebacic acid, cyclohexane-1,2-dicarboxylic acid; 1,4-cyclohexadiene1,2-dicarboxylic acid; 3-methyl-3,5-cyclohexadiene-1,2-dicarboxylic acid and the corresponding acid anhydrides, acid chlorides and acid esters such as phthalic anhydride, phthaloyl chloride and the dimethyl ester of phthalic acid. Preferred polycarboxylic acids are the aliphatic and cycloaliphatic dicarboxylic acids containing no more than 14 carbon atoms and the aromatic dicarboxylic acids containing no more than 14 atoms. Any polyhydric alcohol having more than 2 hydroxyl groups or any polycarboxylic acid having more than 2 carboxylic groups used to make the polyesters are preferably used in only very minor amounts (preferably less than about 10 mol%, preferably less than 5 mol%, preferably less than 1 mol% of the polyester polyol) to prevent crosslinking and gelling.

Optionally, minor amounts of polyhydric alcohols may be utilized in combination with the above-noted polyol intermediate. Suitable polyhydric alcohols generally have from 2 to 15 carbon atoms, for instance ethylene glycol, 1 ,2-propylene glycol, 1,3-propylene glycol, 1,4-butane diol, 2,3-butane diol, 1,5-pentanediol, glycerol, sorbitol, pentaerythritol, dipropylene glycol, diethylene glycol, and the like. The amount of such polyhydric alcohols is generally from about 0 or 1 to about 40 parts by weight and preferably from about 0 or 1 to about 10 parts by weight based upon 100 parts by total weight of the polyol intermediate.

Polyesters from lactones (for example ε-caprolactone) and polyacetals, polycarbonates or polybutadienes containing terminal hydroxyl groups are also suitable.

Particularly preferred polyol intermediates include polypropylene ether, poly-1,2-butylene ether, and poly-1,4-tetramethylene ether, end-capped so as to have primary hydroxyl end groups, as well as ε-polycaprolactone diols.

The isocyanate used in the prepolymer component is preferably a polyisocyanate. The prepolymer component may be made from one or more isocyanates (preferably polyisocyanates).

Preferably, the polyisocyanate has the formula R(NCO)ₙ where n is an integer of 2, 3 or 4 with 2 or approximately 2 being preferred. It will be appreciated that since combinations of various polyisocyanates can be utilized, the equivalent amount of isocyanate can vary and may not be an integer. R is selected from: an aliphatic moiety having from about 2 to about 20 carbon atoms preferably from about 6 to about 15 carbon atoms; an aromatic moiety (including an aliphatic- and preferably alkyl-substituted aromatic moiety) having from about 6 to about 20 carbon atoms, preferably from about 6 to about 15 carbon atoms; and combinations thereof. Aromatic isocyanates (including aliphatic-substituted aromatic isocyanates) are preferred since they have faster reaction rates than the aliphatic isocyanates.

Examples of suitable polyisocyanates include: 1,6-diisocyanato hexane; 2,2,4- and 2,4,4-trimethyl hexamethylene diisocyanate; p- and m-tetramethyl xylene diisocyanate; 4,4-methylene diphenyl isocyanate (MDI); dicyclohexylmethane-4,4'-diisocyanate (hydrogenated MDI); p- and m-phenylene diisocyanate; 2,4- and 2,6-toluene diisocyanate (TDI); durene-1,4-diisocyanate; isophorone diisocyanate; isopropylene-bis-(p-phenyl isocyanate); and sulfone-bis(p-phenyl isocyanate). Further examples of suitable isocyanates include: 1,5-naphthalenediisocyanate; cumene-2,4-diisocyanate; 4-methoxy-1,3-phenylenediisocyanate; 4-chloro-1,3-phenylenediisocyanate; 4-bromo-1,3-phenylenediisocyanate; 4-ethoxy-1,3-phenylenediisocyanate; 2,4'-diisocyanatodiphenylether; 4,4'-diphenyldiisocyanate; 4,6-dimethyl-1,3-phenylenediisocyanate; 1,10-anthracenediisocyanate; 4,4'-diisocyanatodibenzyl; 3,3-dimethyl-4,4'-diisocyanatodiphenylmethane; 2,6-di-methyl-4,4'-diisocyanatodiphenyl, and the like, and combinations thereof. TDI, MDI and the diphenylmethane diisocyanates based on MDI are preferred. MDI and the diphenylmethane diisocyanates based on MDI are particularly preferred.

The polyisocyanate may be a polymeric polyisocyanate, such as polymethylene polyphenyl isocyanate (PMDI; [C₆H₃(NCO)CH₂]ₙ; or poly[(phenyl isocyanate)-co-formaldehyde]), preferably wherein n is such to provide an Mn of no more than about 500, particularly when used in combination with the aforementioned polyisocyanate of formula R(NCO)ₙ.

Preferably the polyisocyanate is selected from diphenylmethane diisocyanates and polymeric polyisocyanates (particularly PMDI), and particularly combinations thereof, preferably combinations having a relatively minor fraction of one or more diphenylmethane diisocyanates and a relatively major fraction of the polymeric polyisocyanates, and a preferably having an average isocyanate functionality of from about 2 to about 3.2. In a preferred embodiment, the polyisocyanate is a combination of diphenylmethane diisocyanate and PMDI, preferably comprising a relatively minor fraction of diphenylmethane diisocyanate and a relatively major fraction of PMDI.

Also useful are diisocyanates prepared by capping low molecular weight (i.e. having Mn of less than about 300) diols, ester diols or diamines with diisocyanates. Examples include the reaction products of one mole of 1,4-butanediol or bis(4-hydroxybutyl)-succinate (molecular weight=262) with two moles of hexamethylene diisocyanate. Any combination of diisocyanates can be employed. Combinations of slower reacting aliphatic with faster reacting aromatic isocyanates can be advantageously used.

The prepolymer desirably comprises free isocyanate, i.e. free NCO groups. Such free NCO groups may exist on the ends of the urethane prepolymer and/or on unreacted polyisocyanates, etc. The prepolymer component is made from a polyol intermediate and a large equivalent excess amount of a polyisocyanate, in order to generate these free NCO groups. Preferably, the equivalent ratio of the amount of polyisocyanate utilized to make the prepolymer to the hydroxyl containing polyol intermediate (i.e. NCO:OH) is preferably at least 2.0, preferably from about 2.0 to about 75, preferably from about 2.0 to about 50, preferably from about 10 to about 40, preferably from about 15 to about 35, based upon the polyol intermediate.

The prepolymer component can also contain various conventional additives or fillers in conventional amounts. Conventional additives include antioxidants, ultraviolet light inhibitors, plasticizers, thickening agents, and the like. Examples of fillers which are generally mineral (i.e. inorganic), typically in powder form, and which also serve to adjust the viscosity of the prepolymer component include ground mica, talc, kaolin clay, calcium carbonate, calcium sulfite, colloidal silica, fumed silica, wollastonite, ballotini, hollow glass microspheres, glass, carbon and graphite fibres, metallic oxides (such as zinc, titanium, zirconium and the like), ground quartz, metallic silicates, metallic powders (such as lead, aluminium, bronze, and the like). A preferred filler is talc. The amount of filler is generally an effective amount to produce a viscosity so that the prepolymer component can be readily pumped through processing equipment such as adhesive meter-mixing machines. Such an effective amount is preferably from about 5 to about 100 parts by weight and preferably from about 10 to about 50 parts by weight per 100 parts by weight of the prepolymer.

The prepolymer component preferably further comprises an effective amount of one or more shelf life stabilizer(s) so that the components, and particularly the catalyst(s), are maintained in a stable condition, as is conventional in the art. A shelf stabilizer can be present in the prepolymer component or the curative component or both, and is preferably present in at least the curative component. The shelf-stabilizer may be a dessicant. Suitable shelf life stabilizer includes molecular sieves, such as crystalline potassium, sodium or calcium aluminosilicates, and potassium, sodium or calcium aluminophosphates, and the like. The shelf life stabilizer may be a zeolite. The amount of shelf stabilizer in a given component (i.e. the prepolymer component or the curative component) is generally from about 0.1 to about 15.0 percent by weight and preferably from about 0.5 to about 10 percent by weight based upon the weight of the component in which it is contained.

If it is desired that the polyurethane adhesive system or composition have a colour or hue, any conventional pigment or dye can be utilized in conventional amounts. Hence, any pigment known to the art and to the literature can be utilized, such as titanium dioxide, iron oxide, carbon black, and the like, as well as various dyes provided that they do not interfere with the various urethane reactions. The pigments, dyes, etc., may be utilized in either the prepolymer component, the curative component, or both.

The prepolymer component is generally made by adding the polyol intermediate to a reactor along with the various other additives such as an antioxidant, a filler, a shelf stabilizer, and the like. The reactor contents are then generally heated with the various ingredients therein mixed and a vacuum applied to remove moisture. The one or more isocyanates are added after moisture has been removed. In the absence of a catalyst, the formation of a prepolymer generally occurs at an elevated temperature from about room temperature to about 150°C, with the specific temperature depending upon the type of polyol intermediate and the type of isocyanate(s). If a urethane catalyst is contained in the prepolymer component, the prepolymer reaction will occur at a lower temperature.

### The curative component

The polyol in the curative component is a curing agent which suitably serves as a cross-linking agent. Thus, the polyol in the curative component is suitably of a type such that a cross-linked polyurethane adhesive is formed upon curing of the adhesive system. Thus, if the polyol intermediate and the isocyanate of the prepolymer component are essentially difunctional, the polyol in the curative component suitably contains sufficient hydroxyls having more than two OH groups per molecule so that a stable cross-linked network is formed upon curing. Alternatively, if either the intermediate polyol or the isocyanate of the prepolymer component has a functionality significantly greater than 2, the polyol in the curative component may have a functionality of 2, or optionally greater than 2, to form the cross-linked network.

The polyol is preferably nitrogen-free. Preferably a nitrogen-free polyol does not contain a nitrogen atom in the polymer backbone, and preferably a nitrogen-free polyol does not contain any nitrogen atoms in either the polymer backbone or any pendant group(s). Preferably, the polyol in the curative component is a polyether or a polyester polyol.

The polyol in the curative component may be selected from diols, triols, tetrols, pentols, hexols, and the like, and preferably from triols, tetrols, pentols, hexols, and the like.

The polyol in the curative component may be independently selected from the compounds described hereinabove for the intermediate polyol utilized to form the prepolymer. The polyol in the curative component may be the same as the intermediate polyol utilized to form the prepolymer.

Suitable polyols include the alkyl, aromatic, or alkyl-substituted aromatic diols having from 2 to about 12 carbon atoms preferably from about 2 to about 8 carbon atoms. Further suitable polyols are polyhydric alcohols having from 3 to 15 carbon atoms, preferably from 3 to 10 carbon atoms, and from 3 to 8 hydroxyl groups, such as triols, tetraols, pentols, hexols, and the like. Specific examples including glycerol, erythritol, pentaerythritol, arabitol, sorbitol, trimethylol propane, the various ethylene or propylene oxide adducts of trimethylol propane, glycerol, pentaerythritol, sorbitol, and the like. Further suitable polyols are the polyether polyols described hereinabove for the intermediate polyol. Polyether polyols which are grafted with styrene or acrylonitrile, methylacrylic nitrile, and the like are also suitable, and although such polyol compounds have a nitrogen atom, the nitrogen atom is in the grafted portion of the polymer or oligomer. Other suitable polyols are carbohydrates, such as disaccharides and especially monosaccharides, along with reaction products thereof with alcohols having from 1 to 5 carbon atoms such as for example alkyl glucoside, and the like. Examples of specific disaccharides include sucrose, lactose, and maltose. Examples of monosaccharides include the various pentoses such as arabinose, xylose, lyxose, ribose, as well as the various hexoses such as glucose, gulose, mannose, galactose, talose, allose, altrose, idose, fructose, sorbose, and the like. Of the various carbohydrates, the various alkyl glucosides with the alkyl group having from 1 to 12 carbon atoms are preferred.

Examples of preferred polyols in the curative component include ethylene or propylene oxide adducts of trimethylol propane, pentaerythritol, glycerol, alkyl glucosides, or carbohydrates, with the propylene oxide adduct of pentaerythritol (also referred to as pentaerythritol propoxylate) being preferred.

Preferably, a polyol in the curative component has a number average molecular weight of from about 400 to about 10,000 Daltons, desirably 2,000 to 9,000 Daltons. A further preferred polyol in the curative component has a number average molecular weight of from about 400 to about 1,000 Daltons, preferably from about 500 to about 800 Daltons.

Preferably the curative component contains a plurality of polyols. Each of the polyols is independently selected from diols, triols, tetrols, pentols, hexols, and the like, as described above.

Preferably, at least one of the plurality of polyol(s) has a number average molecular weight of from 2,000 to 9,000 Daltons, and preferably such polyols are at least tri-functional (and preferably tri-functional), and preferably such polyols constitute at least 50 wt% (and preferably at least 60 wt%) of the polyol fraction in the curative component.

Preferably, at least one of the plurality of polyol(s) has a number average molecular weight of from about 400 to about 1,000 Daltons (preferably from about 500 to about 800 Daltons), and preferably such polyols are at least tri-functional (preferably tri-functional or tetra-functional), and preferably such polyols constitute less than 50 wt% (and preferably no more than 40 wt%, preferably no more than 30 wt%, preferably no more than 25 wt%) of the polyol fraction in the curative component.

Preferably, the curative component further comprises a chain extender, as is known in the art. Particularly preferred chain extenders in the present invention are selected from polyols, preferably diols, such as C₁₋₁₀ alkyl diols, more typically C₁₋₆ alkyl diols, for instance methyl-propanediol (MPD), 1,4-butanediol (BDO), 1,6-hexanediol (HDO) and trimethylolpropane monoallyl ether (TMPME). Preferably, such polyols have a number average molecular weight of no more than about 200. Preferably such polyols constitute less than about 10 wt%, and preferably from about 5 to about 10 wt%, of the polyol fraction in the curative component.

The curative component preferably also contains one or more amine(s). An amine can suitably serve to provide sag resistance after the prepolymer component is mixed with the curative component. The amine generally reacts with an equivalent amount of a free isocyanate group (NCO) in the prepolymer component to produce a polyurea. The reaction is generally very quick and the polyurea produced forms a strong hydrogen-bonded network and significantly increases the viscosity of the mixed adhesive before cure and thereby provides sag resistance before cure. The amine is preferably a primary or secondary amine.

The amine may be aliphatic, cycloaliphatic or aromatic, and is preferably aliphatic or cycloaliphatic, preferably cycloaliphatic. The amine can be a di-or multi-functional amine having from about 1 to about 14 carbon atoms, preferably from about 2 to about 8 carbon atoms. The amine which provides sag resistance is preferably selected from secondary amines, primary aromatic amines and primary cycloaliphatic amines. Examples of suitable amine compounds include diethylenetriamine, ethylenediamine, tetramethylenediamine, pentamethylenediamine, hexamethylenediamine, 2,5-diamine-n-hexane, bis(p-aminocyclohexyl)methane, xylene diamine, naphthalene diamines (particularly 1,8-naphthalene diamine), piperazine and 1,3-diaminopropanol-2. The amine(s) which provides sag resistance are preferably present such that the total amount of the amine is from about 0.1 to about 5 parts by weight and preferably from about 0.5 to about 3 parts by weight per 100 parts by weight of the curative component.

One or more amine(s) may also be present in the curative component as a chain extender, as is conventional in the art, particularly wherein the amine is a secondary amine. This amine is preferably a diamine, preferably an aromatic diamine, preferably an alkyl-substituted aromatic diamine. The amine preferably has a number average molecular weight of less than 500. Suitable examples are Lonzacure^{®} DETDA 80 (diethyl toluene diamine, commercially available from Lonza Ltd., Switzerland) and Ethacure^{®} 300 (dimethyl thiotoluene diamine, commercially available from Albermarle Corporation, Baton Rouge, LA).

Where a chain extender is present, the total amount of chain extender is preferably from about 0.1 to about 10 parts by weight, preferably at least about 1 part by weight, preferably at least about 3 parts by weight, preferably at least about 5 parts by weight, per 100 parts by weight of the curative component.

The combined amount of the polyol and the amine is preferably such that the equivalent ratio of the free NCO groups of the prepolymer component to the curative OH and NH groups of the curative component is at least 1.2 or from about 1.2 to about 2.0, desirably from about 1.2 to about 1.6 and preferably from about 1.3 to about 1.5. The utilization of such an excess of isocyanate results in the formation of various groups in addition to urethanes, such as allophanate, biuret, carbodiimide, and the like, providing a cured polyurethane adhesive which exhibits good adhesion to a fibre-reinforced composite or metal substrate without the need of any surface pretreatment.

The curative component contains one or more catalyst(s), preferably wherein the amount of catalyst is at least 0.01, preferably from about 0.01 to about 1.0, preferably from about 0.02 to about 0.50, preferably from about 0.05 to about 0.50 % by weight, based on the total weight of the curative component.

The catalyst in the curative component may be selected, and preferably is selected, from one or more urethane catalyst(s), and is preferably a single urethane catalyst. The urethane catalyst is suitably a liquid. Suitable urethane catalysts are tin catalysts, conventional in the art, including: stannous carboxylates such as stannous acetate, stannous octoate, stannous laurate, stannous oleate, and the like; and dialkyl tin salts of carboxylic acids such as dibutylin diacetate, dibutyltin dilaurate, dibutyltin maleate, dibutyltin di-2-ethylhexoate, dilauryltin diacetate, dioctyltin diacetate, or the like. Dialkylltin sulfide such as dibutyltin sulfide, trialkyltin hydroxide, dialkyltin oxide or dialkyltin dichloride may also be utilized. The alkyl is preferably selected from C₁₋₂₀, preferably C₁₋₁₀, preferably C₂₋₆ alkyl, and particularly from butyl, preferably n-butyl. Further suitable urethane catalysts include organomercury and organic bismuth compounds wherein the organic portion is an aliphatic moiety and preferably an alkyl moiety having from 2 to 20 carbon atoms. Tertiary amines can also be used such as triethylamine, benzyldimethylamine, triethylenediamine and tetramethylbutanediamine. The tertiary amine catalysts, when utilized, are preferably used in amounts of from about 0.01 to about 5 parts by weight per 100 parts by weight of the curative component.

The catalyst may also be selected from the so-called trimerization catalysts, which are conventional in the art, such as those disclosed in US-5175228. Examples of a trimerization catalyst include amines; phosphines; alkoxides; metal oxides; hydroxides of quaternary N, P, As or Sb; metal carboxylates; organometallics containing Zn, Si, Sn, Pb or Sb and O, N or S; metal chelates; metal hydrides; organic, inorganic or Lewis acids; combination catalysts; zwitterions; quaternary ammonium carboxylates; 2,4,6 tris(dimethylaminomethyl)phenol; N,N',N"tris(dimethylaminopropyl)sym-hexahydrotriazine; and combinations thereof. Further examples of trimerization catalysts are benzyl trimethylammonium hydroxide, benzyl trimethylammonium methoxide, potassium acetate, potassium ethoxide, potassium octoate, potassium phthalimide, sodium dihydrobis(2-methoxy ethoxy)aluminium hydride, sodium ethoxide, sodium methoxide, tertiary amines such as trimethyl-2-hydroxypropyl ammonium 2-ethyl hexanoate, and tetramethylammonium-2-ethyl hexoate, or combinations thereof.

Preferably the catalyst in the curative component is selected from the urethane catalysts described hereinabove, optionally in combination with one or more trimerization catalysts described hereinabove, and preferably the catalyst in the curative component is selected only from the urethane catalysts (i.e. in the absence of a trimerization catalyst).The afore-mentioned catalysts may be also present in the prepolymer component, but preferably the catalyst is present only in the curative component.

Optionally, the curative component may comprise one or more isocyanates, and preferably one or more polyisocyanates. Suitable isocyanates are preferably selected from the isocyanates described hereinabove in respect of the prepolymer component. The isocyanate in the curative component may be the same as or different to the isocyanate in the prepolymer component. Where the curative component may comprise one or more isocyanates, the amount of isocyanate in the curative component is preferably present in an amount of up to about 10 wt%, by total weight of the curative component.

The curative component may optionally contain various additives such as pigments, dyes, fillers, plasticizers, antioxidants and the like, as is conventional in the art and described hereinabove for the prepolymer component. In general, such compounds can be utilized only in either the curative or the prepolymer component, or in both components. Preferably, the curative component contains significant amounts of fillers as described hereinabove, particularly talc, kaolin clay, silica calcium carbonate, and the like. Fumed silica is particularly preferred in order to prevent the fillers from settling out. Preferably, the curative component also contains pigment(s) and/or dye(s), as discussed hereinabove. The amounts, as well as the type, of additives are well known in the art, and further described hereinabove.

The various ingredients of the curative component can be generally added in any manner and mixed therewith. The ingredients of the curative component are suitably liquid, including the polyol cross linking agent, the catalyst and any primary amine. The curative component is suitably a liquid and any non-liquid ingredients such as pigments can be readily blended therein.

### The organo-clay

The organo-clay may be present in the prepolymer component or the curative component or both. Preferably, the organo-clay is present in at least the prepolymer component and in a preferred embodiment is present in only the prepolymer component.

As used herein, the term "organo-clay" refers to a naturally occurring phyllosilicate clay mineral which has been chemically modified by one or more organic compound(s), preferably an organic compound (or salt) comprising a cation, preferably wherein the organic compound is selected from the group consisting of quaternary ammonium compounds, quaternary phosphonium compounds, sulfonium compounds, and mixtures thereof, and preferably wherein the organic compound is a quaternary ammonium compound. It will be appreciated that the organic salt comprising a cation has a positive charge localized on a single atom or on a small group of atoms within the compound. The preparation of such organically modified clay minerals is known in the art and various organo-clays are commercially available. A portion of the interlayer metal cations of the naturally occurring clay mineral are exchanged with organo-cations, generating organo-philic surfaces containing covalently linked organic moieties, and in which the lamellar structure remains analogous to the parent clay mineral.

Preferably the clay mineral is a magnesium-containing clay mineral, optionally containing other metal atoms such as Al, Fe, Ca, Na and/or K, and preferably is a clay mineral wherein the metal atoms are selected from magnesium and aluminium and combinations thereof, and preferably the metal atoms are magnesium. Preferably, the clay mineral is not a pure aluminosilicate (wherein the term "pure aluminosilicate" as used herein refers to a mineral clay which consists or consists essentially of aluminium, silicon, oxygen and hydrogen atoms, such as kaolinites and halloysites). Preferably, the clay mineral is selected from magnesium aluminium silicate clay minerals and magnesium silicate clay minerals, and preferably from magnesium silicate clay minerals. Preferably, the clay mineral is selected from sepiolite and palygorskite, and preferably the clay mineral is sepiolite.

A preferred quaternary ammonium compound contains an ammonium cation of formula N(R₁)(R₂)(R₃)(R₄)⁺, wherein R₁, R₂, R₃ and R₄ are independently selected from organic radicals and hydrogen wherein at least one of R₁, R₂, R₃ and R₄ is not hydrogen, and preferably at least two, preferably at least three, and preferably all four of R₁, R₂, R₃ and R₄ are selected from organic radicals. The organic radicals may the same as or different to each other, and are preferably different from each other.

The organic radicals R₁, R₂, R₃ and R₄ are preferably independently selected from the group consisting of:
(a) alkyl groups;
(b) aralkyl groups;
(c) aryl groups;
(d) beta, gamma-unsaturated alkyl groups having 22 or fewer carbon atoms, typically 12 or fewer carbon atoms, and preferably 6 or fewer carbon atoms; and
(e) hydroxy-substituted aliphatic hydrocarbyl radicals having 2 to 22 carbon atoms, preferably 2 to 12 carbon atoms, preferably 2 to 6 carbon atoms,
and preferably wherein R₁, R₂, R₃ and R₄ are independently selected from (a), (b) and (c) above, and preferably from (a) and (b) above.

The aromatic ring(s) in the aryl and aralkyl groups may be substituted or unsubstituted. The alkyl groups are preferably selected from C₁₋₃₀, and preferably from C₁₋₂₂ alkyl groups. Preferably, at least one of R₁, R₂, R₃ and R₄ is selected from lower alkyl, preferably C₁₋₆ alkyl, preferably C₁₋₄ alkyl (i.e. methyl, ethyl, i-propyl, n-propyl, n-butyl, i-butyl and t-butyl), and preferably from methyl.

Preferably, at least one of R₁, R₂, R₃ and R₄ is selected from C₁₀₋₃₀ alkyl, preferably C₁₂₋₂₂ alkyl. Such alkyl groups may be derived from naturally occurring fats or oils such as tallow, corn oil, soybean oil, cottonseed oil, castor oil, linseed oil, safflower oil, palm oil, peanut oil and the like, and synthetic versions of the same, as well as mixtures thereof.

In one non-limiting embodiment, the quaternary ammonium compound comprises at least two alkyl groups selected from C₁₋₃₀, and preferably from C₁₋₂₂ alkyl groups, preferably wherein at least one alkyl group is selected from C₁₋₄ alkyl and/or at least one alkyl group is selected from C₁₂₋₂₂ alkyl.

Examples of suitable aryl groups include phenyl and substituted phenyl; N-alkyl and N,N-dialkyl anilines wherein the alkyl groups are C₁₋₂₂ alkyl; ortho-, meta- and para-nitrophenyl; ortho-, meta- and para-alkyl phenyl wherein the alkyl groups are C₁₋₂₂ alkyl; 2-, 3- and 4-halophenyl wherein the halo group is chloro, bromo, or iodo; and 2-, 3- and 4-carboxyphenyl and esters thereof, wherein the alcohol of the ester is derived from an alkyl alcohol wherein the alkyl groups are C₁₋₂₂ alkyl; phenols; and fused ring aryl moieties such as naphthalene, anthracene, and phenanthrene. Typically, the aryl group is selected from mono-cyclic aromatic groups, preferably carbocyclic, preferably phenyl and substituted phenyl.

Preferably, at least one of R₁, R₂, R₃ and R₄, and more preferably one, is selected from aralkyl, preferably benzyl. Additional examples of benzyl and substituted benzyl moieties, include those materials derived from e.g. benzyl halides, benzhydryl halides, trityl halides, alpha-halo-alpha-phenylalkanes wherein the alkyl chain has from 1 to 22 carbon atoms, such as 1-halo-1-phenylethane, 1-halo-1-phenyl propane, and 1-halo-1-phenyloctadecane; substituted benzyl moieties, such as those derived from ortho-, meta- and para-chlorobenzyl halides, para-methoxy-benzyl halides, ortho-, meta- and para-nitrilobenzyl halides, and ortho-, meta- and para-alkylbenzyl halides wherein the alkyl chain contains from 1 to 22 carbon atoms; benzyl alcohols; and fused ring benzyl-type moieties, such as those derived from 2-halomethylnaphthalene, 9-halomethylanthracene and 9-halomethylphenanthrene, wherein the halo group comprises chloro, bromo, iodo, or any other such group which serves as a leaving group in the nucleophilic attack of the benzyl type moiety such that the nucleophile replaces the leaving group on the benzyl type moiety.

The beta, gamma-unsaturated alkyl group may be cyclic or acyclic, unsubstituted or substituted with aliphatic radicals containing up to 3 carbon atoms such that the total number of aliphatic carbons on the beta, gamma-unsaturated radical is 6 or less. The beta, gamma-unsaturated alkyl radical may be substituted with an aromatic ring that likewise is conjugated with the unsaturation of the beta, gamma moiety or the beta, gamma radical may be substituted with both aliphatic radicals and aromatic rings. Representative examples of cyclic beta, gamma-unsaturated alkyl groups include 2-cyclohexenyl and 2-cyclopentenyl. Representative examples of acyclic beta, gamma unsaturated alkyl groups containing 6 or less carbon atoms include propargyl; allyl(2-propenyl); crotyl(2-butenyl); 2-pentenyl; 2-hexenyl; 3-methyl-2-butenyl; 3-methyl-2-pentenyl; 2,3-dimethyl-2-butenyl; 1,1-dimethyl-2-propenyl; 1,2-dimethyl propenyl; 2,4-pentadienyl; and 2,4-hexadienyl. Representative examples of acyclic-aromatic substituted compounds include cinnamyl(3-phenyl-2 propenyl); 2-phenyl-2-propenyl; and 3-(4-methoxyphenyl)-2-propenyl. Representative examples of aromatic and aliphatic substituted materials include 3-phenyl-2-cyclohexenyl; 3-phenyl-2-cyclopentenyl; 1,1-dimethyl-3-phenylpropenyl; 1,1,2-trimethyl-3-phenyl-2-propenyl; 2,3-dimethyl-3-phenyl-2-propenyl; 3,3-dimethyl-2-phenyl-2-propenyl; and 3-phenyl-2-butenyl.

The hydroxy-substituted aliphatic hydrocarbyl radical is preferably selected those wherein the hydroxyl is not substituted at the carbon atom adjacent to the positively charged atom. The aliphatic hydrocarbyl radical is preferably acyclic (i.e. preferably not cycloaliphatic). The C₂₋₆ hydrocarbyl radical may be substituted with an aromatic ring (preferably carbocyclic, preferably mono-cyclic). Representative examples include 2-hydroxyethyl; 3-hydroxypropyl; 4-hydroxypentyl; 6-hydroxyhexyl; 2-hydroxypropyl; 2-hydroxybutyl; 2-hydroxypentyl; 2-hydroxyhexyl; 2-hydroxycyclohexyl; 3-hydroxycyclohexyl; 4-hydroxycyclohexyl; 2-hydroxycyclopentyl; 3-hydroxycyclopentyl; 2-methyl-2-hydroxypropyl; 1,1,2-trimethyl-2-hydroxypropyl; 2-phenyl-2-hydroxyethyl; 3-methyl-2-hydroxybutyl; and 5-hydroxy-2-pentenyl.

A further preferred class of quaternary ammonium cations is described hereinbelow as the quaternary ammonium cation of formula (II). A particularly preferred quaternary ammonium cation is dimethyl benzyl hydrogenated tallow (C₁₄₋₁₈) ammonium, suitably in the form of its chloride salt.

Preferably the quaternary ammonium compound has formula (I): 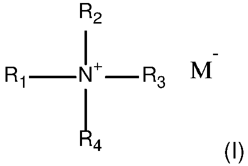 wherein R₁, R₂, R₃ and R₄ are as defined above; and M⁻ is an anion.

In a further embodiment, the quaternary ammonium compound has formula (II): 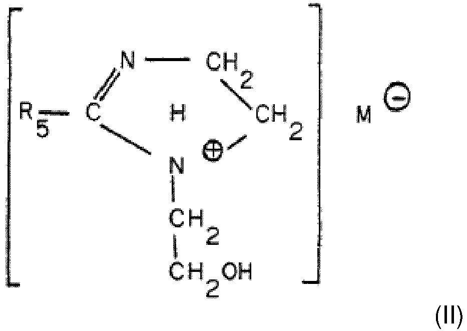 wherein R₅ is an organic radical as defined hereinabove for R₁ to R₄, and preferably wherein R₅ is selected from C₁₋₃₀ alkyl groups, and preferably from C₁₋₂₂ alkyl groups, and preferably from C₁₂₋₂₂ alkyl, as defined above; and wherein M⁻ is an anion.

Phosphonium salts (P(R₁)(R₂)(R₃)(R₄)⁺) and sulfonium salts (S(R₁)(R₂)(R₃)⁺) may also be used wherein R₁, R₂, R₃ and R₄ are as defined above.

The anion is suitably one which will not adversely affect the reaction product or the recovery of the same. Such anions include, for example, chloride, bromide, iodide, hydroxide, nitrite, methyl sulfate and acetate, and the like, used in amounts sufficient to neutralize the organic cation.

Suitable organic compounds (particularly quaternary ammonium compounds) are described in US-5336647.

The amount of organic compound (preferably quaternary ammonium compound) in the organo-clay is preferably no more than about 30 wt%, preferably no more than about 25 wt%, preferably no more than about 20 wt%, preferably no more than about 15 wt%, preferably at least about 5 wt%, preferably at least about 10 wt% of the organic compound, by total weight of the organo-clay. One or more organic compounds (preferably quaternary ammonium compounds) may be present. Typically, only one type of organic compound is present, i.e. either one or more quaternary ammonium compound(s), or one or more quaternary phosphonium compound(s), or one or more sulfonium compounds. Where more than one organic compounds are present, the afore-mentioned amounts represent the total amount of such compounds present in an organo-clay component.

Suitable quaternary ammonium compounds and organo-clay compounds are disclosed in EP-0221225-A.

The total amount of the organo-clay in the multi-component urethane adhesive system is from 0.1 to 10.0 wt%, preferably at least about 0.5 wt% preferably at least about 1.0 wt%, preferably no more than about 7.0 wt%, preferably no more than about 5.0 wt%, preferably in the range of from about 1.0 to about 5.0 wt%, typically no more than about 3.0 wt%, typically no more than about 2.0 wt%, based upon the total weight of the multi-component urethane adhesive system.

Where the organo-clay is present in the prepolymer component, the amount of the organo-clay is preferably from about 0.1 to about 10.0 wt%, preferably at least about 0.5 wt%, preferably at least about 1.0 wt%, preferably no more than about 7.0 wt%, preferably no more than about 5.0 wt%, preferably no more than about 3.0 wt%, typically no more than about 2.0 wt%, based upon the total weight of the prepolymer component.

Where the organo-clay is present in the curative component, the amount of the organo-clay is preferably from about 0.1 to about 10.0 wt%, preferably at least about 0.5 wt%, preferably at least about 1.0 wt%, preferably no more than about 7.0 wt%, preferably no more than about 5.0 wt%, preferably no more than about 3.0 wt%, typically no more than about 2.0 wt%, based upon the total weight of the curative component.

### The halogenated polyether polyol

The halogenated polyether polyol may be present in the prepolymer component or the curative component or both. Preferably, the halogenated polyether polyol is present in at least the curative component and in a preferred embodiment is present in only the curative component. Where halogenated polyether polyol is present in the prepolymer component, the prepolymer component is or comprises the reaction product of the polyol intermediate, the isocyanate and the halogenated polyether polyol.

Suitable halogen-containing polyether polyols are formed by a process comprising homopolymerization of haloepoxides, copolymerization of haloepoxides and alkylene oxides, and etherification of polyhydric alcohols with alkylene oxides or haloepoxides. Halogen-containing polyhydric alcohols are suitably used when the etherifying oxide is an alkylene oxide. An example is the reaction of 4 or 5 moles of propylene oxide per mole of 2,2-bis(bromomethyl) 1,3-propanediol. The halogen on the or each of these reactants is preferably independently selected from chlorine and bromine, but iodine and fluorine are also contemplated.

Suitable polyhydric alcohols contain 2 to 6 hydroxyl groups and 2 to 20 carbons, usually 2 to 6 carbons when aliphatic, and may be saturated or unsaturated. The polyhydric alcohol may be unsubstituted or substituted with non-interfering groups. Preferred polyhydric alcohols are glycerol, glycols, pentaerythritol as well as their halogen-containing derivatives. Examples of suitable polyhydric alcohols include ethylene glycol, propylene glycol, 1,4-butanediol, diethylene glycol, dipropylene glycol, neopentyl glycol, triethylene glycol, hexamethylene glycol, hexanetriol, butanetriol, trimethylol propane, polyglycerol, dipentaerythritol, polypentaerythritol, 2,2 bis(bromomethyl)-1,3-propanediol, erythritol, mannitol, sorbitol, 2-butene-1,4-diol, 2-butyne-1,4-diol, p,p'-isopropylidenediphenol, resorcinol, catechol, hydroquinone, alkyl glucosides such as methyl glucoside, 4,4'-dihydroxybenzophenone, mono-, di-, and poly-saccharides, such as glucose, sucrose, lactose and starch, etc.

Suitable haloepoxides are saturated or unsaturated, straight or branched chain, aliphatic C3-C10 haloepoxides. Examples of preferred reactants are epichlorohydrin and epibromohydrin. Representative aliphatic haloepoxides include: 1-chloro-2,3-epoxypropane (2-(chloromethyl)oxirane), 3-chloro-1,2-epoxybutane; 3-bromo-1,2-epoxybutane; 1-chloro-2,3-epoxybutane; 1-bromo-2,3-epoxybutane; 1-chloro-3,4-epoxy-1-butene; 3,4-dichloro-1,2-epoxybutane; 3,4-dibromo-1,2-epoxybutane; 1,4-dichloro-2,3-epoxybutane; 1,4-dibromo-2,3-epoxybutane; chloroisobutylene oxide; bromoisobutylene oxide; 1-chloro-2,3- epoxypentane; 1-bromo-2,3-epoxypentane; 4-chloro-2,3-epoxypentane; 4-bromo-2,3-epoxypentane; 3-chloro-1,2-epoxypentane; 3-bromo-1,2-epoxypentane; 1,4-dichloro-2,3-epoxypentane; 1,4-dibromo-2,3-epoxypentane; 1-chloro-2,3-epoxyhexane; 1-bromo-2,3-epoxyhexane; 1,4-dichloro-2,3-epoxyhexane; 1,4-dibromo-2,3-epoxyhexane; 2-chloro-3,4-epoxyhexane; 2-bromo-3,4-epoxyhexane; 2,5-dichloro-3,4-epoxyhexane; 2,5-dibromo-3,4- epoxyhexane; 4-chloro-2,3-epoxyhexane; 4-bromo-2,3-epoxyhexane.

Suitable alkylene oxides preferably contain from 2 to 6 carbons, and preferably selected from ethylene oxide and propylene oxide and mixtures thereof.

These reactants and/or reaction products produced therefrom may be, and preferably are, further halogenated, preferably brominated and/or chlorinated.

One or more hydroxyl groups in the halogenated polyether polyol may be (and preferably is) alkoxylated, preferably by C₁₋₄ alkyl, preferably methoxylated.

Preferably, the halogenated polyether polyol comprises from about 20 to about 50 wt% halogen atoms, preferably from about 30 to about 45 wt%, preferably from about 30 to about 40 wt%, by weight of the halogenated polyether polyol.

Preferably the halogenated polyether polyol comprises bromine and/or chloride atoms, preferably bromine and chloride atoms, preferably a greater proportion of bromine atoms than chlorine atoms. Preferably, the halogenated polyether polyol comprises at least about 25 wt% and preferably no more than about 40 wt% bromine atoms, by weight of the halogenated polyether polyol. Preferably, the halogenated polyether polyol comprises at least about 5 wt% and preferably no more than about 10 wt% chloride atoms, by weight of the halogenated polyether polyol.

Preferably, the halogenated polyether polyol is a methoxylated, brominated and/or chlorinated polyether polyol.

Preferably the halogenated polyether polyol is selected from a halogenated polyether polyol derived from 2-butyne-1,4-diol and 2-(chloromethyl)oxirane, preferably brominated and methoxylated.

Preferably, the hydroxyl number of the halogenated polyether polyol is from about 200 to about 400 mg KOH/g, preferably no more than about 350 mg KOH/g. The number average molecular weight of the halogenated polyether polyol is preferably in the range of from about 250 to about 2000, preferably from about 400 to about 1000, preferably no more than 750, preferably no more than 600. The halogenated polyether polyol is suitably a liquid.

The total amount of the halogenated polyether polyol in the multi-component urethane adhesive system is from 0.1 to 10.0 wt%, preferably at least about 1.0 wt%, preferably at least about 2.0 wt%, preferably at least about 3.0 wt%, preferably at least about 4.0 wt%, preferably at least about 5.0 wt%, preferably no more than about 7.0 wt%, preferably in the range of from about 3.0 to about 7.0 wt%, based upon the total weight of the multi-component urethane adhesive system.

Where the halogenated polyether polyol is present in the curative component, the amount of the halogenated polyether polyol is preferably from about 0.1 to about 10.0 wt%, preferably at least about 1.0 wt%, preferably at least about 2.0 wt%, preferably at least about 3.0 wt%, preferably at least about 4.0 wt%, preferably at least about 5.0 wt%, preferably no more than about 7.0 wt%, preferably in the range of from about 3.0 to about 7.0 wt%, based upon the total weight of the curative component.

Where the halogenated polyether polyol is present in the prepolymer component, the amount of the halogenated polyether polyol is preferably from about 0.1 to about 10.0 wt%, preferably at least about 1.0 wt%, preferably at least about 2.0 wt%, preferably at least about 3.0 wt%, preferably at least about 4.0 wt%, preferably at least about 5.0 wt%, preferably no more than about 7.0 wt%, preferably in the range of from about 3.0 to about 7.0 wt%, based upon the total weight of the prepolymer component.

### Use of the adhesive system

The prepolymer and curative components of the multi-part urethane adhesive system described herein are separately maintained until it is desired that a urethane adhesive be made. The urethane adhesive is made by blending the prepolymer and curative components together utilizing any conventional mixer or blender, etc., and heating to cure the multi-component system and form the urethane adhesive. The cure temperature will vary depending upon the types of ingredient in each component, but is generally from about 60°C to about 150°C, and preferably from about 90°C to about 125°C. Mixing time is generally less than about 10 minutes, preferably less than about 5 minutes and typically from about 1 to 4 minutes.

In use, the prepolymer and curative components are mixed together and applied to the substrate(s). Thus, for instance, where two substrates are to be adhered together, the mixed prepolymer and curative components may be applied to the surfaces of one or both substrates. The assembly is then heated to cure the system and form an *in-situ* adhesive, to provide a urethane adhesive composite comprising the substrates.

The adhesive system described herein exhibits excellent adhesive bond strength to a range of substrates, including fibre-reinforced composites (wherein the polymeric material of the composite is a thermoplastic or thermoset polymeric material), coated metals such as epoxy-coated metallic sheet, including for instance wherein the metal is aluminum or steel, and polymeric substrates (including polyolefin, polyester, polyamide, polycarbonate, acrylonitrile butadiene styrene, polyurethane, polyurea, polydicyclopentadiene, epoxy resins and the like). Polymeric materials such as polyethylene, polypropylene, so-called thermoplastic polyolefin (TPO) materials, and the like can be used, as well as a variety of other thermoplastic polymers. Fiber-reinforced composites typically contain from about 10 to about 70 wt% fiber, by total weight of the composite, and are typically selected from glass fibers, carbon fibers and natural fibers.

The adhesive system may be utilized to bond two or more of the afore-mentioned substrates together, wherein the two or more substrates may be the same or different. Thus, the adhesive system may be utilized to bond fibre-reinforced composites together; fibre-reinforced composites to metal or coated metal (including painted metal); and fibre-reinforced composites or metal or coated metal to the polymeric substrates.

The adhesive system is particularly advantageous in that it exhibits excellent adhesive bond strength to a range of substrates without the need of a pre-treatment of the surface of the substrate, i.e. the surface is treatment-free. By the term "treatment-free" it is meant that the substrate need not be treated whatsoever, including by (1) mechanically treating such as by sanding, abrading, etc., (2) by treating with a solvent such as methylene chloride, acetone, isopropyl alcohol, heptane, toluene, and the like, or (3) by treating with a chemical treatment such as a primer, isocyanate, or amine. This advantage of the invention is particularly pertinent to the fibre-reinforced composites and polymeric substrates. This advantage of the invention is also exhibited in the bonding of coated metals such as e-coated metal substrates having a polymer coating (typically an epoxy resin) deposited (typically electro-deposited) thereon, for instance a functional polymer coating to improve the corrosion resistance or other characteristic (non-adhesion-promoting) of the substrate.

In use, the adhesive composition described herein retains excellent adhesive bond strength over a wide temperature range, and particularly at high temperatures. The multi-component system and adhesive composition of the present invention is particularly suitable for use in the automotive industry, and other large volume applications with short production cycle times, wherein structural and appearance grade components are bonded together, such as automotive hoods, doors, fenders, front ends, trunk lids, body panels, and the like.Thus, according to a further aspect of the invention, there is provided a polyurethane adhesive composition which is the reaction product of the multi-component urethane system defined herein.

According to a further aspect of the invention, there is provided a urethane adhesive composite comprising at least two substrates therein, the substrates bonded together by the urethane adhesive system as defined herein.

According to a further aspect of the invention, there is provided a urethane adhesive composite comprising at least two substrates and the polyurethane adhesive composition as defined herein between the substrates.

According to a further aspect of the invention, there is provided the use of a halogenated polyether polyol and/or an organo-clay comprising a quaternary ammonium compound as an adhesion promoter in a multi-component urethane adhesive system as described herein comprising:
(A) a prepolymer component made from:
   (i) one or more polyol intermediate(s), and
   (ii) one or more isocyanate(s); and
(B) a curative component comprising:
   (i) one or more polyol(s), and
   (ii) one or more catalyst(s),
wherein each of the halogenated polyether polyol and the organo-clay may, independently, be present in the prepolymer component and/or the curative component.

According to a further aspect of the invention, there is provided the use of an organo-clay comprising a quaternary ammonium compound as an adhesion promoter in a multi-component urethane adhesive system as described herein comprising:
(A) a prepolymer component made from:
   (i) one or more polyol intermediate(s), and
   (ii) one or more isocyanate(s); and
(B) a curative component comprising:
   (i) one or more polyol(s), and
   (ii) one or more catalyst(s),
preferably wherein the adhesive system further comprises a halogenated polyether polyol, and wherein the organo-clay is present in the prepolymer component and/or the curative component.

### Measurement methods

### (i) Bonding strength

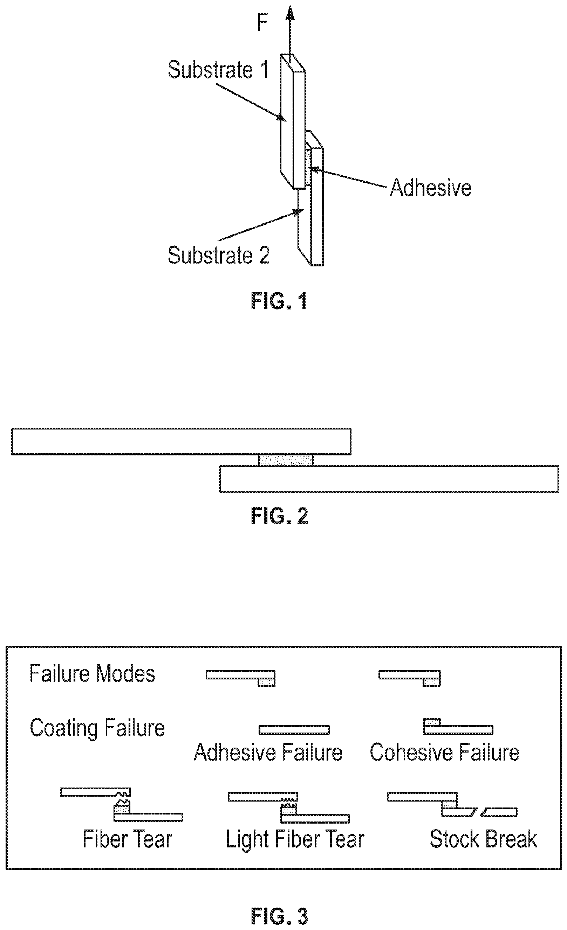

The bonding strength of the adhesive composition on solid specimens is determined by the lap shear test according to European standard EN 1465 (10 mm/min speed) on a ZWICK^{®} Z020 tensile machine with a pneumatic grip and a 5KN sensor. Thus, two specimens (substrate 1 and substrate 2) are bonded together with adhesive as illustrated in Figure 1. The specimen size used in this work is 100 x 25 x 5 mm. The bond area dimensions are 15 x 25 x 1 mm. Bonding is effected 1 cm from the edge of specimen, as shown in Figure 2. The bond is then cured as required, left for 24 hours at 23°C and 50%RH to condition, and then tested in the lap shear strength test. Unless otherwise stated, bond strength is measured at 23°C. Adhesion performance is measured using the following substrates:
1. Sheet Moulding Compound (SMC): a glass fibre-reinforced sheet of unsaturated polyester resin further comprising mineral fillers
2. E-coat: an electrodeposited epoxy resin on steel (e-coated steel PPG 6000), widely used in the automotive industry to avoid corrosion
3. Polypropylene (PP): a glass fibre-reinforced polypropylene (30% glass fibre)
4. Polycarbonate (PC): Lexan^{™} 9030, commercially available from SABIC Innovative Plastics
5. Polyamide (PA): glass fibre-reinforced polyamide 6 (15% glass fibre)
6. Carbon fibre-reinforced polymer (CFRP): a composite material of carbon fiber and thermosetting resins
7. Acrylonitrile butadiene styrene (ABS)

A tensile force (F) is applied in the same direction of the bonded joint and specimen axis. The adhesive joint is put under high shear until it breaks. The force required to break the sample or separate the two substrates is registered, and the maximum pressure (Pₘₐₓ, in MPa) at breakage is recorded. All adhesive systems are evaluated in sets of three and the mean of these repetitions is taken as the final result. The failure mode, which provides information on the bond quality, is also recorded. Failure modes, which are classified according to ASTM D5573, are illustrated in Figure 3.

### (ii) Dynamic Mechanical Analysis (DMA)

The cured adhesive was also tested by dynamic mechanical analysis (DMA) using a TA Instruments ARES-G2 Rheometer, commercially available from TA Instruments. Samples are prepared by mixing the prepolymer and curative mixed in 1:1 v/v ratio, and the mixture is compression moulded and cured for 15 minutes at 121ºC. The specimen is surface ground to a thickness of 0.16 ± 0.01 inches prior to testing. The specimen is tested at 2°C/minute between -100 to 150°C at a constant frequency of 1 Hz. The specimen is finger-tightened at 25°C and then cooled to -100°C and re-tightened at 50 cN/m. The specimen is tested at a constant tensile force of 20 grams ± 10 grams sensitivity. The strain is initially set to 0.03% but is allowed to increase as the material softened at higher temperatures in order to exceed the transducer's lower torque limit of detectability.

The measured properties include G' (Storage Shear Modulus), G" (Loss Shear Modulus), and Tan Delta (Dissipation Factor). G' measures the elastic nature of the material and represents the stiffness of the specimen (and is analogous to the modulus value measure on a universal mechanical tester (e.g. Instron with a torsional fixture)). G" measures the viscous nature of the material and represents the amount of energy dissipated by the material as heat. Tan Delta is defined as G"/G' and also represents the energy dissipation properties of the material.

The invention is further illustrated with reference to the following non-limiting examples.

### Examples

### Example 1

A prepolymer component was prepared from the ingredients shown in Table 1.

**Table 1**

| **Component** | **Function** | **%wt** |
|---|---|---|
| Polypropylene glycol | Polyol | 30.0 |
| Polymeric MDI | Isocyanate | 52.5 |
| Talc | Filler | 5.3 |
| Fumed silica | Filler | 0.7 |
| Organo-modified sepiolite (<15% of quaternary ammonium compounds) | Adhesion promoter | 1.6 |
| Molecular sieve powder | Stabilizer/dessicant | 9.9 |

The prepolymer component was prepared by introducing the polyol (660g) into a mixing vessel at room temperature and heating to 75-85°C for 1 hour. A first portion of the isocyanate (653.4g) was added and mixed for 30 minutes at 75°C. Talc filler (132g) was added to the mixture and mixed in for 5 minutes at 80°C, followed by addition of the organo-clay (35.2g) and mixing for 15 minutes at 80°C. The mixture was cooled to 65°C and the molecular sieve (217.8g) was mixed in for 30 minutes at 65°C. The remaining portion of the isocyanate (501.6g) was added to the mixture, and mixed in for 30 minutes at 65°C.

A curative component was prepared from the ingredients shown in Table 2.

**Table 2**

| **Component** | **Function** | **%wt** |
|---|---|---|
| EO Capped PO triol | Polyol (1) | 46.2 |
| Tetrafunctional alkoxylated polyol | Polyol (2) | 15.7 |
| Chain extender | Polyol (3) | 6.0 |
| Chlorinated wax paraffin) | Plasticizer | 4.9 |
| Talc | Filler | 10.3 |
| Fumed silica | Thixotropic filler | 2.3 |
| Amine | Sag resistance | 1.6 |
| Molecular sieve powder | Stabilizer/dessicant | 7.0 |
| Halogenated polyetherpolyol | Adhesion promoter | 5.7 |
| Organo-tin catalyst | Catalyst | 0.1 |
| Carbon black + green pigment | Colour pigment | 0.2 |

The curative component was prepared by introducing polyol (1) (544.2g) and polyol (2) (187.8g) into a mixing vessel and heating to 88-93°C for 1 hour under vacuum. After cooling to 75°C, the plasticizer (57.4g) was added and mixed for 15 minutes, followed by the mixing in of the talc (134.0g) for 5 minutes, the fumed silica (30.9g) for 5 minutes and the pigment (3.8g) for 5 minutes. The resulting mixture was cooled to 65°C and the molecular sieve (82.1g) was added and mixed for 15 minutes, followed by addition and mixing of the halogenated polyether polyol (67.6g) and amine (19.7) for 30 minutes. The mixture was cooled to 50°C and polyol (3) (71.8g) was added and mixed for 30 minutes, follows by addition and mixing of the catalyst (0.8g) for 30 minutes.

### Example 2 (according to claim 14)

Example 1 was repeated except the curative component did not contain the halogenated polyether polyol, but instead contained the same amount of a phosphorylated polyol. Thus, the sole adhesion-promoter used was the organo-clay in the prepolymer component.

### Example 3 (Comparative)

A prepolymer component and curative component similar to those of Example 1 were prepared. However, the curative component did not contain any halogenated polyether polyol, but instead contained the same amount of a phosphorylated polyol. Further, the prepolymer component did not contain an organo-clay. Example 3 was representative of the conventional two-part adhesive disclosed in US-5175228.

The adhesion performance of these adhesive systems was tested by assessing the lap shear strength of two glass fibre-reinforced unsaturated polyester resin sheets (30% glass fibre content) having a thickness of 1mm, in accordance with the test method described herein. The pre-polymer and curative were mixed in a 1:1 weight ratio. The mixture was cured at 121°C for 120 seconds. Samples were tested in the lap shear strength test over a range of temperatures. For the test at 23°C, the sample prepared as previously described was tested at 23°C without further conditioning. For the test at -30°C, the sample prepared as previously described was conditioned for 1h at -30°C and immediately tested at -30°C. For the test at 80°C, the sample prepared as previously described was conditioned in an oven for 1h at 80°C and then immediately tested at 80°C.

The results are shown in Table 3.1 below as the pressure maximum (Pₘₐₓ, in MPa) at breakage of the sample.

**Table 3.1**

| **Test Conditions** | **Example 1** | | **Example 2** | | **Example 3** |
|---|---|---|---|---|---|
| | **Pₘₐₓ (Mpa)** | **Improvement vs. Example 3** | **Pₘₐₓ (Mpa)** | **Improvement vs. Example 3** | **Pₘₐₓ (Mpa)** |
| -30°C | 9.54 | 24% | 7.62 | -1% | 7.72 |
| 23°C | 6.69 | 20% | 5.71 | 3% | 5.57 |
| 80°C | 4.01 | 24% | 3.89 | 19% | 3.27 |

The results demonstrate the unexpected and significant improvements of the adhesive systems of the present invention relative to comparative Example 3 over a broad temperature range, which is particularly pronounced for Example 1. The results also demonstrate the particular advantage of the present invention, which is the provision of excellent adhesion at elevated temperatures.

In addition, the failure mode was also significant. For Example 3 (comparative), at 80°C, adhesive failure was observed in 50% of the samples. In contrast, no adhesive failure was observed at 80 °C for Examples 1 and 2, the failure mode being fibre tear in all tests, demonstrating exceptionally strong adhesive performance.

In a similar manner, the adhesion performance of the adhesive systems of Example 1 (invention) and Example 3 (comparative) was tested by assessing the lap shear strength of two epoxy-coated steel sheets. The results are shown in table 3.2 below, and demonstrate the same effect observed for the glass fibre-reinforced unsaturated polyester resin sheets noted above.

**Table 3.2**

| **Test Conditions** | **Example 1** | | **Example 3** |
|---|---|---|---|
| | **Pₘₐₓ (Mpa)** | **Improvement vs. Example 3** | **Pₘₐₓ (Mpa)** |
| -30°C | 24.62 | 25% | 19.63 |
| 23°C | 17.80 | 10% | 16.12 |
| 80°C | 9.56 | 25% | 7.67 |

The lap shear strength of Example 1 (invention) and Example 3 (comparative) was also compared after conditioning the sample in a variety of ways, as described below.

A first set of samples were subjected to cataplasma for 7 days as follows. Cotton sheets were cut approximately 17 x 50 cm, and grouped together in bundles that weighed 45 ± 5 grams. Samples were then carefully rolled in the combined cotton sheets, fitting the samples (3 to 6) in each roll. The rolls were then placed in a sealed plastic bags, and water was added to the bag (10x the weight of the cotton). All samples were then placed in an oven at 70ºC for 7 days. The samples were removed, held at -30°C for 2 hrs, then held at 23°C for 4 hrs, and then tested at 23ºC.

A second set of samples were conditioned by keeping in water at 23ºC for 7 days, removed and held at 23ºC for 24 hours, and then tested at 23ºC. A third set of samples were conditioned in an oven at 70ºC for 7 days, removed and held at 23ºC for 24 hours, and then tested at 23ºC.

The results are shown in Tables 4.1 and 4.2 below as the pressure maximum (Pₘₐₓ, in MPa) at breakage of the sample. Table 4.1 shows the results for the glass fibre-reinforced unsaturated polyester resin sheets (SMC). Table 4.2 shows the results for the e-coated steel substrate.

**Table 4.1**

| **Test Conditions** | **Example 1** | **Example 3** |
|---|---|---|
| After 7 days cataplasma | 5.76 | 5.61 |
| After 7 days in water at ambient temperature | 7.09 | 6.53 |
| After 7 days at 70°C | 6.90 | 6.33 |

**Table 4.2**

| **Test Conditions** | **Example 1** | **Example 3** |
|---|---|---|
| Cataplasma | 16.10 | 13.19 |
| After 7 days in water at ambient temperature | 18.08 | 17.27 |
| After 7 days at 70°C | 17.47 | 16.75 |

The results demonstrate the unexpected and significant improvements of the adhesive systems of the present invention relative to comparative Example 3 after ageing of the sample in a variety of ways.

In a similar manner, the adhesion performance of Example 1 (invention) and Example 3 (comparative) was tested by assessing the lap shear strength at 23°C for other substrates, in accordance with the test method described herein. The results are shown in Table 5 below.

**Table 5**

| **Test Conditions** | **Example 1** | **Example 3** |
|---|---|---|
| Polypropylene | 6.0 | 5.9 |
| Polyamide | 12.0 | 7.8 |
| Carbon fibre-reinforced resin | 15.0 | 13.1 |
| Polycarbonate | 10.0 | 8.7 |
| ABS | 14.8 | 13.1 |

The results demonstrate the unexpected and significant improvements of the adhesive systems of the present invention relative to conventional systems across a broad range of substrates.

The failure mode is also significant. For instance, for the ABS substrates, adhesive failure was observed in about 50% of the tests using Example 3 (comparative), whereas for Example 1 it was the substrate that broke ("stock break") in all tests, indicating a much stronger adhesive bond for the adhesive systems of the present invention.

The storage modulus of the adhesive systems of Example 1 (invention) and Example 3 (comparative) was also measured by dynamic mechanical analysis, as described herein, and the results shown in Table 6. An asterisk in the table denotes that a peak was too broad to define with a single value.

**Table 6**

| **Sample** | **G' Onset Temperature** | **G" Peak Temperature** | **Tan Delta Peak Temperature** | **Storage Modulus in MPa** | | | |
|---|---|---|---|---|---|---|---|
| | | | | **at -30°C** | **at 23°C** | **at 80°C** | **at 100°C** |
| Ex.3 | -63.1 & 40.5 | -57.3 & * | -53.7 & 71.4 | 483 | 147 | 16 | 9 |
| Ex.1 | -61.8 & 38.1 | -55.1 & * | -49.9 & 76.2 | 548.2 | 148.5 | 23.4 | 15.7 |

It can be seen from the data in Table 6 that the storage modulus at 100°C for Example 1 (invention) is approximately equal to the storage modulus at 80°C of Example 3 (comparative), demonstrating superior stability of mechanical performance at high temperature of the adhesive systems of the present invention.

### Examples 4 to 7 (according to claim 14)

A further series of samples were prepared in which the amount of organo-clay in each of the prepolymer and curative components was varied. A halogenated polyether polyol was not used in either component in this series of tests. The composition of the prepolymer and curative components was otherwise the same as in Examples 2 and 3 above, the principal differences being the amount of organo-clay in each component, as shown in Table 7 below. Example 4 is a comparative example corresponding to the conventional formulations known in the art; Examples 5 to 7 are examples according to the present invention. Table 7 also shows the results of the lap shear strength tests on the E-coat substrate at various temperatures.

**Table 7**

| | **Ex.4** | **Ex.5** | **Ex.6** | **Ex.7** |
|---|---|---|---|---|
| Organo-clay in prepolymer component (wt%) | 0 | 0.7 | 1.4 | 1.4 |
| Organo-clay in curative component (wt%) | 0 | 1.5 | 2.0 | 3.0 |
| Pₘₐₓ at -30°C (MPa) to E-coat | 21.48 | 22.52 | 26.01 | 23.19 |
| Pₘₐₓ at 23°C (MPa) to E-coat | 15.17 | 17.26 | 17.83 | 18.34 |
| Pₘₐₓ at 80°C (MPa) to E-coat | 6.81 | 8.13 | 8.22 | 9.04 |

The data in Table 7 demonstrate that the use of an organo-clay provides unexpected and significant improvements in adhesive performance relative to conventional adhesive systems.

## Claims

1. A multi-component urethane adhesive system comprising:
(A) a prepolymer component made from:
(i) one or more polyol intermediate(s), and
(ii) one or more isocyanate(s); and
(B) a curative component comprising:
(i) one or more polyol(s), and
(ii) one or more catalyst(s),
wherein the adhesive system further comprises 0.1 to 10.0 wt% based upon the total weight of the multi-component urethane adhesive system of an organo-clay and 0.1 to 10.0 wt% based upon the total weight of the multi-component urethane adhesive system of a halogenated polyether polyol.

2. The adhesive system according to claim 1, wherein: the organo-clay is present in the prepolymer component or the curative component; and/or the organo-clay is a clay mineral chemically modified by an organic compound selected from the group consisting of quaternary ammonium compounds, quaternary phosphonium compounds and sulfonium compounds, preferably wherein the organo-clay is a clay mineral chemically modified by a quaternary ammonium compound, more preferably wherein the quaternary ammonium compound comprises at least two alkyl groups of C1- 30, or at least one alkyl group of C1-4 and at least one alkyl group of C12-22; or wherein the quaternary ammonium compound comprises an aralkyl group.

3. The adhesive system according to claim 1 or 2, wherein the organo-clay comprises 5 to 30 wt% of the organic compound by total weight of the organo-clay; and/or the organo-clay is selected from the group consisting of an organo-sepiolite and an organo-palygorskite.

4. The adhesive system according to any one of claims 1 to 3, wherein the halogenated polyether polyol is derived from homopolymerization of haloepoxides, the copolymerization of haloepoxides and alkylene oxides, or the etherification of polyhydric alcohols with alkylene oxides or haloepoxides; and/or the halogenated polyether polyol comprises from 20 to 50 wt% of halogen atoms by weight of the halogenated polyether polyol, and the halogenated atoms are bromine and chloride atoms, preferably wherein the halogenated polyether polyol comprises from 25 wt% to 40 wt% of the bromine atoms by weight of the halogenated polyether polyol and from 5 wt% to 10 wt% of the chloride atoms by weight of the halogenated polyether polyol; and/or the halogenated polyether polyol exhibits a hydroxyl number of from 200 to 400 mg KOH/g, and has a number average molecular weight of from 250 to 2000 Daltons.

5. The adhesive system according to any one of claims 1 to 4, wherein the polyol intermediate is a polyether or polyester polyol; and/or the polyol intermediate has a number average molecular weight of from 400 to 10,000 Daltons.

6. The adhesive system according to any one of claims 1 to 5, wherein the isocyanate is a polyisocyanate selected from (i) polyisocyanates of formula R(NCO)n where n is an integer of 2, 3 or 4, and R is selected from: an aliphatic moiety having from 2 to 20 carbon atoms, an aromatic moiety having from 6 to 20 carbon atoms, and combinations thereof; (ii) polymethylene polyphenyl isocyanate; and (iii) combinations thereof; or the isocyanate is selected from the group consisting of toluene, diisocyanate, diphenylmethane diisocyanates and polymethylene polyphenyl isocyanate, and mixtures thereof; or the isocyanate is selected from the group consisting of diphenylmethane diisocyanates and polymethylene polyphenyl isocyanate, and the average isocyanate functionality is from 2 to 3.2; or the amount of the isocyanate to the polyol intermediate has an equivalent ratio of at least 2.0 based upon the polyol intermediate, and wherein the prepolymer component has free NCO groups.

7. The adhesive system according to any one of claims 1 to 6, wherein the catalyst is a tin catalyst selected from the group consisting of stannous carboxylates, dialkyl tin salts of carboxylic acids, dialkyltin sulphide, trialkyltin hydroxide, dialkyltin oxide, and dialkyltin chloride and the alkyl is C2-6 alkyl, preferably wherein the catalyst is dibutyltin sulphide; or the catalyst is an organomercury or organic bismuth compound catalyst having an organic portion and the organic portion is an alkyl moiety having from 2 to 20 carbon atoms; or the catalyst is a tertiary amine; and/or the amount of the catalyst is at least 0.01% by weight, based upon the total weight of the curative component.

8. The adhesive system according to any one of claims 1 to 7, wherein the polyol in the curative component is a nitrogen-free polyol having a number average molecular weight of from 400 to 10,000 Daltons; and/or
the curative component further comprises from 0.1 to 5 parts by weight of amines for every 100 parts by weight of the polyol of the curative component; and/or the curative component further comprises one or more isocyanates.

9. The adhesive system according to any one of claims 1 to 8, further comprising from 0.1 to 15 % by weight of molecular sieve in the prepolymer component or the curative component based upon the weight of the component in which it is contained.

10. A polyurethane adhesive composition comprising the reaction products of the multi- component urethane adhesive system of any one of claims 1 to 9.

11. A urethane adhesive composite comprising at least two substrates bonded by the urethane adhesive system of any of claims 1 to 9.

12. A urethane adhesive composite comprising at least two substrates and the polyurethane adhesive composition of claim 10 between the substrates.

13. The urethane adhesive composite according to claim 11 or 12, wherein the substrate is selected from the group consisting of fiber-reinforced composites and pre-pregs, coated metallic substrates and polymeric materials; preferably wherein the polymeric materials are polyolefin, polyester, polyamide, polycarbonate, acrylonitrile butadiene styrene, polyurethane, polyurea, polydicyclopentadiene, or epoxy resins.

14. Use of a halogenated polyether polyol and/ or an organo-clay as an adhesion promoter in a multi-component urethane adhesive system comprising:
(A) a prepolymer component made from:
(i) one or more polyol intermediate(s), and
(ii) one or more isocyanate(s); and
(B) a curative component comprising:
(i) one or more polyol(s), and
(ii) one or more catalyst(s),
wherein each of the halogenated polyether polyol and the organo-clay is independently present in the prepolymer component or the curative component, wherein the urethane adhesive system comprises from 0.1 to 10.0 wt% based upon the total weight of the multi-component urethane adhesive system of the organo-clay and from 0.1 to 10.0 wt% based upon the total weight of the multi-component urethane adhesive system of the halogenated polyether polyol.

15. Use according to claim 14 wherein the adhesive system is as defined in any of claims 1 to 9.

## Patentansprüche

1. Mehrkomponenten-Urethanklebesystem, das umfasst:
(A) eine Vorpolymerkomponente, die hergestellt ist aus:
(i) einem oder mehreren Polyolzwischenprodukten, und
(ii) einem oder mehreren Isocyanaten; und
(B) eine Aushärtungskomponente, die umfasst:
(i) ein oder mehrere Polyole, und
(ii) einen oder mehrere Katalysatoren,
wobei das Klebesystem in Bezug auf das Gesamtgewicht des Mehrkomponenten-Urethanklebesystems ferner 0,1 bis 10,0 Gew.-% eines Organotons und in Bezug auf das Gesamtgewicht des Mehrkomponenten-Urethanklebesystems 0,1 bis 10,0 Gew.- % eines halogenierten Polyetherpolyols umfasst.

2. Klebesystem nach Anspruch 1, wobei: der Organoton in der Vorpolymerkomponente oder in der Aushärtungskomponente vorhanden ist; und/oder der Organoton ein Tonmineral ist, das durch eine organische Verbindung chemisch modifiziert wurde, die aus der Gruppe ausgewählt ist, die aus quartären Ammoniumverbindungen, quartären Phosphoniumverbindungen und Sulfoniumverbindungen besteht, vorzugsweise wobei der Organoton ein Tonmineral ist, das durch eine quartäre Ammoniumverbindung chemisch modifiziert wurde, stärker bevorzugt wobei die quartäre Ammoniumverbindung zumindest zwei Alkylgruppen von C1-30 oder zumindest eine Alkylgruppe von C1-4 und zumindest eine Alkylgruppe von C12-22 umfasst; oder wobei die quartäre Ammoniumverbindung eine Aralkylgruppe umfasst.

3. Klebesystem nach Anspruch 1 oder 2, wobei der Organoton in Bezug auf das Gesamtgewicht des Organotons 5 bis 30 Gew.-% der organischen Verbindung umfasst; und/oder der Organoton aus der Gruppe ausgewählt ist, die aus einem Organosepiolit und einem Organopalygorskit besteht.

4. Klebesystem nach einem der Ansprüche 1 bis 3, wobei das halogenierte Polyetherpolyol von der Homopolymerisation von Haloepoxiden, der Copolymerisation von Haloepoxiden und Alkylenoxiden oder der Veretherung von polyhydrischen Alkoholen mit Alkylenoxiden oder Haloepoxiden abgeleitet ist; und/oder das halogenierte Polyetherpolyol in Bezug auf das Gewicht des halogenierten Polyetherpolyols 20 bis 50 Gew.-% Halogenatome umfasst und die halogenierten Atome Brom- und Chloridatome sind, vorzugsweise wobei das halogenierte Polyetherpolyol in Bezug auf das Gewicht des halogenierten Polyetherpolyols 25 Gew.-% bis 40 Gew.-% Bromatome und in Bezug auf das Gewicht des halogenierten Polyetherpolyols 5 Gew.-% bis 10 Gew.-% der Chloridatome umfasst; und/oder das halogenierte Polyetherpolyol eine Hydroxylzahl von 200 bis 400 mg KOH/g aufweist und ein zahlengemitteltes Molekulargewicht von 250 bis 2000 Dalton aufweist.

5. Klebesystem nach einem der Ansprüche 1 bis 4, wobei das Polyolzwischenprodukt ein Polyether- oder Polyesterpolyol ist; und/oder das Polyolzwischenprodukt ein zahlengemitteltes Molekulargewicht von 400 bis 10.000 Dalton aufweist.

6. Klebesystem nach einem der Ansprüche 1 bis 5, wobei das Isocyanat ein Polyisocyanat ist, das aus (i) Polyisocyanaten der Formel R(NCO)n, wobei n eine ganze Zahl von 2, 3 oder 4 ist und R ausgewählt ist aus: einer aliphatischen Einheit mit 2 bis 20 Kohlenstoffatomen, einer aromatischen Einheit mit 6 bis 20 Kohlenstoffatomen und Kombinationen davon; (ii) Polymethylenpolyphenylisocyanat; und (iii) Kombinationen davon ausgewählt ist; oder das Isocyanat aus der Gruppe ausgewählt ist, die aus Toluol, Diisocyanat, Diphenylmethandiisocyanaten und Polymethylenpolyphenylisocyanat und Gemischen davon besteht; oder das Isocyanat aus der Gruppe ausgewählt ist, die aus Diphenylmethandiisocyanaten und Polymethylenpolyphenylisocyanat besteht, und die durchschnittliche Isocyanatfunktionalität 2 bis 3,2 beträgt; oder die Menge des Isocyanats gegenüber dem Polyolzwischenprodukt in Bezug auf das Polyolzwischenprodukt ein Äquivalenzverhältnis von zumindest 2,0 aufweist, und wobei die Vorpolymerkomponente freie NCO-Gruppen aufweist.

7. Klebesystem nach einem der Ansprüche 1 bis 6, wobei der Katalysator ein Zinnkatalysator ist, der aus der Gruppe ausgewählt ist, die aus zinnhaltigen Carboxylaten, Dialkylzinnsalzen von Carbonsäuren, Dialyklzinnsulfid, Trialkylzinnhydroxid, Dialkylzinnoxid und Dialkylzinnchlorid besteht, und das Alkyl C2-6-Alkyl ist, vorzugsweise wobei der Katalysator Dibutylzinnsulfid ist; oder der Katalysator ein Organoquecksilber- oder organische Bismutverbindungskatalysator mit einem organischen Abschnitt ist und der organische Abschnitt eine Alkyleinheit mit 2 bis 20 Kohlenstoffatomen ist; oder der Katalysator ein tertiäres Amin ist; und/oder die Menge des Katalysators in Bezug auf das Gesamtgewicht der Aushärtungskomponente zumindest 0,01 Gew.-% beträgt.

8. Klebesystem nach einem der Ansprüche 1 bis 7, wobei das Polyol in der Aushärtungskomponente ein stickstofffreies Polyol mit einem zahlengemittelten Molekulargewicht von 400 bis 10.000 Dalton ist; und/oder
die Aushärtungskomponente ferner 0,1 bis 5 Gewichtsteile Amine für jeweils 100 Gewichtsteile des Polyols der Aushärtungskomponente umfasst; und/oder die Aushärtungskomponente ferner ein oder mehrere Isocyanate umfasst.

9. Klebesystem nach einem der Ansprüche 1 bis 8, das ferner 0,1 bis 15 Gew.-% eines Molekularsiebs in der Vorpolymerkomponente oder der Aushärtungskomponente in Bezug auf das Gewicht der Komponente, in der es enthalten ist, umfasst.

10. Polyurethanklebezusammensetzung, die die Reaktionsprodukte des Mehrkomponenten-Urethanklebesystems nach einem der Ansprüche 1 bis 9 umfasst.

11. Urethanklebeverbundstoff, der zumindest zwei Substrate umfasst, die durch das Urethanklebesystem nach einem der Ansprüche 1 bis 9 verbunden sind.

12. Urethanklebeverbundstoff, der zumindest zwei Substrate und die Polyurethanklebezusammensetzung nach Anspruch 10 zwischen den Substraten umfasst.

13. Urethanklebeverbundstoff nach Anspruch 11 oder 12, wobei das Substrat aus der Gruppe ausgewählt ist, die aus faserverstärkten Verbundstoffen und Prepregs, beschichteten metallischen Substraten und polymeren Materialien besteht; vorzugsweise wobei die polymeren Materialien Polyolefin, Polyester, Polyamid, Polycarbonat, Acrylonitrilbutadienstyrol, Polyurethan, Polyharnstoff, Polydicyclopentadien oder Epoxidharze sind.

14. Verwendung eines halogenierten Polyetherpolyols und/oder eines Organotons als Haftförderer in einem Mehrkomponenten-Urethanklebesystem, das umfasst:
(A) eine Vorpolymerkomponente, die hergestellt ist aus:
(i) einem oder mehreren Polyolzwischenprodukten, und
(ii) einem oder mehreren Isocyanaten; und
(B) eine Aushärtungskomponente, die umfasst:
(i) ein oder mehrere Polyole, und
(ii) einen oder mehrere Katalysatoren,
wobei das halogenierte Polyetherpolyol und der Organoton jeweils unabhängig in der Vorpolymerkomponente oder der Aushärtungskomponente vorhanden sind, wobei das Urethanklebesystem in Bezug auf das Gesamtgewicht des Mehrkomponenten-Urethanklebesystems ferner 0,1 bis 10,0 Gew.-% eines Organotons und in Bezug auf das Gesamtgewicht des Mehrkomponenten-Urethanklebesystems 0,1 bis 10,0 Gew.- % des halogenierten Polyetherpolyols umfasst.

15. Verwendung nach Anspruch 14, wobei das Klebesystem wie in einem der Ansprüche 1 bis 9 definiert ist.

## Revendications

1. Système adhésif d'uréthane à composants multiples comprenant :
(A) un composant prépolymère préparé à partir de :
(i) un ou plusieurs intermédiaire(s) polyol(s), et
(ii) un ou plusieurs isocyanate(s) ; et
(B) un composant de durcissement comprenant :
(i) un ou plusieurs polyol(s), et
(ii) un ou plusieurs catalyseur(s),
dans lequel le système adhésif comprend en outre de 0,1 à 10,0 % en poids, sur la base du poids total du système adhésif d'uréthane à composants multiples, d'une argile organique et de 0,1 à 10,0 % en poids, sur la base du poids total du système adhésif d'uréthane à composants multiples, d'un polyol de polyéther halogéné.

2. Système adhésif selon la revendication 1, dans lequel : l'argile organique est présente dans le composant prépolymère ou le composant de durcissement ; et/ou l'argile organique est un minéral argileux chimiquement modifié par un composé organique choisi dans le groupe constitué par les composés d'ammonium quaternaire, les composés de phosphonium quaternaire et les composés de sulfonium, de préférence dans lequel l'argile organique est un minéral argileux chimiquement modifié par un composé d'ammonium quaternaire, plus préférablement dans lequel le composé d'ammonium quaternaire comprend au moins deux groupes alkyle en C1-30, ou au moins un groupe alkyle en C1-4 et au moins un groupe alkyle en C12-22 ; ou dans lequel le composé d'ammonium quaternaire comprend un groupe aralkyle.

3. Système adhésif selon la revendication 1 ou 2, dans lequel l'argile organique comprend de 5 à 30 % en poids du composé organique par poids total de l'argile organique ; et/ou l'argile organique est choisie dans le groupe constitué par une sépiolite organique et une palygorskite organique.

4. Système adhésif selon l'une quelconque des revendications 1 à 3, dans lequel le polyol de polyéther halogéné est dérivé de l'homopolymérisation d'halogénoépoxydes, de la copolymérisation d'halogénoépoxydes et d'oxydes d'alkylène, ou de l'éthérification d'alcools polyhydriques avec des oxydes d'alkylène ou des halogénoépoxydes ; et/ou le polyol de polyéther halogéné comprend de 20 à 50 % en poids d'atomes d'halogène par poids du polyol de polyéther halogéné, et les atomes halogénés sont des atomes de brome et de chlorure, de préférence dans lequel le polyol de polyéther halogéné comprend de 25 % en poids à 40 % en poids des atomes de brome par poids du polyol de polyéther halogéné et de 5 % en poids à 10 % en poids des atomes de chlorure par poids du polyol de polyéther halogéné ; et/ou le polyol de polyéther halogéné présente un indice d'hydroxyle de 200 à 400 mg de KOH/g et a un poids moléculaire moyen en nombre de 250 à 2 000 Daltons.

5. Système adhésif selon l'une quelconque des revendications 1 à 4, dans lequel l'intermédiaire polyol est un polyol de polyéther ou de polyester ; et/ou l'intermédiaire polyol a un poids moléculaire moyen en nombre de 400 à 10 000 Daltons.

6. Système adhésif selon l'une quelconque des revendications 1 à 5, dans lequel l'isocyanate est un polyisocyanate choisi parmi (i) les polyisocyanates de formule R(NCO)n où n est un nombre entier de 2, 3 ou 4, et R est choisi parmi : un fragment aliphatique ayant de 2 à 20 atomes de carbone, un fragment aromatique ayant de 6 à 20 atomes de carbone, et des combinaisons de ceux-ci ; (ii) un isocyanate de polyméthylène polyphényle ; et (iii) des combinaisons de ceux-ci ; ou l'isocyanate est choisi dans le groupe constitué par le toluène, le diisocyanate, les diisocyanates de diphénylméthane et l'isocyanate de polyméthylène polyphényle, et des mélanges de ceux-ci ; ou l'isocyanate est choisi dans le groupe constitué par les diisocyanates de diphénylméthane et l'isocyanate de polyméthylène polyphényle, et la fonctionnalité isocyanate moyenne est de 2 à 3,2 ; ou la quantité de l'isocyanate par rapport à l'intermédiaire polyol a un rapport d'équivalent d'au moins 2,0 sur la base de l'intermédiaire polyol, et dans lequel le composant prépolymère a des groupes NCO libres.

7. Système adhésif selon l'une quelconque des revendications 1 à 6, dans lequel le catalyseur est un catalyseur à base d'étain choisi dans le groupe constitué par les carboxylates stanneux, les sels de dialkylétain d'acides carboxyliques, un sulfure de dialkylétain, un hydroxyde de trialkylétain, un oxyde de dialkylétain et un chlorure de dialkylétain et l'alkyle est un alkyle en C2-6, de préférence dans lequel le catalyseur est le disulfure de dibutylétain ; ou le catalyseur est un composé catalyseur à base d'organomercure ou de bismuth organique ayant une partie organique et la partie organique est un fragment alkyle ayant de 2 à 20 atomes de carbone ; ou le catalyseur est une amine tertiaire ; et/ou la quantité du catalyseur est d'au moins 0,01 % en poids, sur la base du poids total du composant de durcissement.

8. Système adhésif selon l'une quelconque des revendications 1 à 7, dans lequel le polyol dans le composant de durcissement est un polyol exempt d'azote ayant un poids moléculaire moyen en nombre de 400 à 10 000 Daltons ; et/ou
le composant de durcissement comprend en outre de 0,1 à 5 parties en poids d'amines pour chaque 100 parties en poids du polyol du composant de durcissement ; et/ou
le composant de durcissement comprend en outre un ou plusieurs isocyanates.

9. Système adhésif selon l'une quelconque des revendications 1 à 8, comprenant en outre de 0,1 à 15 % en poids de tamis moléculaire dans le composant prépolymère ou le composant de durcissement sur la base du poids du composant dans lequel il est contenu.

10. Composition adhésive de polyuréthane comprenant les produits de réaction du système adhésif d'uréthane à composants multiples selon l'une quelconque des revendications 1 à 9.

11. Composite adhésif d'uréthane comprenant au moins deux substrats liés par le système adhésif d'uréthane selon l'une quelconque des revendications 1 à 9.

12. Composite adhésif d'uréthane comprenant au moins deux substrats et la composition adhésive de polyuréthane selon la revendication 10 entre les substrats.

13. Composite adhésif d'uréthane selon la revendication 11 ou 12, dans lequel le substrat est choisi dans le groupe constitué par les composites renforcés par des fibres et les pré-imprégnés, les substrats métalliques revêtus et les matériaux polymères ; de préférence dans lequel les matériaux polymères sont une polyoléfine, un polyester, un polyamide, un polycarbonate, un acrylonitrile butadiène styrène, un polyuréthane, une polyurée, un polydicyclopentadiène ou des résines époxy.

14. Utilisation d'un polyol de polyéther halogéné et/ou d'une argile organique en tant que promoteur d'adhérence dans un système adhésif d'uréthane à composants multiples comprenant :
(A) un composant prépolymère préparé à partir de :
(i) un ou plusieurs intermédiaire(s) polyol(s), et
(ii) un ou plusieurs isocyanate(s) ; et
(B) un composant de durcissement comprenant :
(i) un ou plusieurs polyol(s), et
(ii) un ou plusieurs catalyseur(s),
dans laquelle chacun du polyol de polyéther halogéné et de l'argile organique est présent indépendamment dans le composant prépolymère ou le composant de durcissement, dans laquelle le système adhésif d'uréthane comprend de 0,1 à 10,0 % en poids, sur la base du poids total du système adhésif d'uréthane à composants multiples, de l'argile organique et de 0,1 à 10,0 % en poids, sur la base du poids total du système adhésif d'uréthane à composants multiples, du polyol de polyéther halogéné.

15. Utilisation selon la revendication 14, dans laquelle le système adhésif est tel que défini dans l'une quelconque des revendications 1 à 9.
